# EUROPEAN PATENT SPECIFICATION

(11) **EP 4 351 190 B1**
(45) Date of publication and mention of the grant of the patent: **25.11.2026**
(21) Application number: 23212800.9
(22) Date of filing: 06.07.2020
(51) Int. Cl.: H04W 76/15, H04W 8/24, H04W 84/12

(54) **MULTI-LINK COMMUNICATION METHODS, COMPUTER-READABLE STORAGE MEDIUM AND APPARATUS**
MEHRFACHVERBINDUNGSKOMMUNIKATIONSVERFAHREN, COMPUTERLESBARES SPEICHERMEDIUM UND VORRICHTUNG
PROCÉDÉS DE COMMUNICATION À LIAISONS MULTIPLES, SUPPORT DE STOCKAGE LISIBLE PAR ORDINATEUR ET APPAREIL

(30) Priority: 12.07.2019 CN 201910634696
(43) Date of publication of application: 10.04.2024
(62) Document number(s) of the earlier application(s) in accordance with Art. 76 EPC: 20839626.7 / 3 993 520
(73) Proprietor: Nokia Technologies Oy, 02610 Espoo (FI)
(72) Inventor: ZHOU, Yifan, Shenzhen, 518129 (CN); GUO, Yuchen, Shenzhen, 518129 (CN); LI, Yunbo, Shenzhen, 518129 (CN); GAN, Ming, Shenzhen, 518129 (CN)
(74) Representative: Cohausz & Florack

(56) References cited:
- LIWEN CHU (MARVELL): "multiple band discussion", vol. 802.11 EHT; 802.11be, 14 May 2019 (2019-05-14), pages 1 - 7, XP068151258, Retrieved from the Internet <URL:https://mentor.ieee.org/802.11/dcn/19/11-19-0821-00-00be-multiple-band-discussion.pptx> [retrieved on 20190514]
- PO-KAI HUANG (INTEL): "Extremely Efficient Multi-band Operation", vol. 802.11 EHT; 802.11be, 14 May 2019 (2019-05-14), pages 1 - 25, XP068151259, Retrieved from the Internet <URL:https://mentor.ieee.org/802.11/dcn/19/11-19-0822-00-00be-extremely-efficient-multi-band-operation.pptx> [retrieved on 20190514]
- YUNBO LI (HUAWEI): "channel access in multi-band operation", vol. 802.11 EHT; 802.11be, 10 July 2019 (2019-07-10), pages 1 - 16, XP068152826, Retrieved from the Internet <URL:https://mentor.ieee.org/802.11/dcn/19/11-19-1116-00-00be-channel-access-in-multi-band-operation.pptx> [retrieved on 20190710]
- LAURENT CARIOU (INTEL): "CR for 6 GHz - Discovery", vol. 802.11ax, 9 July 2018 (2018-07-09), pages 1 - 7, XP068128358, Retrieved from the Internet <URL:https://mentor.ieee.org/802.11/dcn/18/11-18-1227-00-00ax-cr-for-6-ghz-discovery.docx> [retrieved on 20180709]

## Description

### TECHNICAL FIELD

This application relates to the field of communication technologies, and in particular, to multi-link communication methods, a computer-readable storage medium and an apparatus.

### BACKGROUND

With development of wireless technologies, a multi-link device (multi-link device) can support multi-link communication, for example, perform communication on a 2.4 GHz frequency band, a 5 GHz frequency band, and a 60 GHz frequency band at the same time. The multi-link device may perform switching between different frequency bands even if there are a limited quantity of antennas, to select an optimal frequency band to ensure communication quality. As more application traffic is carried by a wireless network, a wireless-fidelity (wireless-fidelity, Wi-Fi) system evolves toward a goal of a high rate. To increase a peak rate of a station in the multi-link device, multi-link aggregation communication has become an additional feature of a next-generation wireless local area network (wireless local area networks, WLAN) technology. The multi-link aggregation communication involves coordination between a plurality of links, but the plurality of links are mutually restricted. For example, it is difficult for a radio transceiver unit to support a full-duplex operation. If data is simultaneously transmitted and received on two links that do not support simultaneous transmitting/receiving operations, communication quality cannot be ensured.

Liwen Chu (Marvell), "multiple band discussion", IEEE 802.11-19/0821r0, 14 May 2019, discloses that a multi-band STA/AP entity can announce whether it supports the reception in one band while transmitting PPDU in another band (support of simultaneous Tx and Rx). Po-Kai Huang (Intel), "Extremely Efficient Multi-band Operation", IEEE 802.11-19/0822r0, 12 May 2019, discusses the need to have extremely efficient multi-band operation, which minimizes MAC overhead, and proposes a multi-link framework to accommodate a key use case.

### SUMMARY

The invention is defined by the appended claims. As defined by claim 1, the invention provides a multi-link communication method, comprising: generating, by a first multi-link device, a radio frame, wherein the first multi-link device comprises a first station operating on a first link and a second station operating on a second link; and transmitting, by the first multi-link device, the radio frame on the first link, wherein the radio frame comprises an information element, the information element comprises second indication information, the second indication information comprises a threshold, and the threshold is used to indicate a minimum value of a difference between operating frequencies of two links that support simultaneous transmitting/receiving operations.

As defined by claim 2, the invention provides a multi-link communication method, comprising: receiving, by a third station, a radio frame transmitted by a first multi-link device, wherein the first multi-link device comprises a first station operating on a first link and a second station operating on a second link, wherein the radio frame comprises an information element, wherein the information element comprises second indication information, the second indication information comprises a threshold, and the threshold is used to indicate a minimum value of a difference between operating frequencies of two links that support the simultaneous transmitting/receiving operations, obtaining, by the third station, the threshold from the radio frame.

Preferred embodiments of the method according to claim 1 or the method according to claim 2 are defined by claims 3 to 11.

As defined by claim 12, the invention provides a computer-readable storage medium, the computer-readable storage medium storing instructions which, when the instructions are run on a computer, cause the computer to perform the method according to any one of claims 1 to 11.

As defined by claim 13, the invention provides an apparatus, configured to perform the method according to any one of claims 1 to 11.

That a multi-link device does not support simultaneous transmitting/receiving operations on the first link and the second link includes: The multi-link device does not support that the first station transmits a first-bandwidth physical layer protocol data unit PPDU on the first link while the second station receives a second-bandwidth physical layer protocol data unit PPDU on the second link, or that the first station receives a first-bandwidth physical layer protocol data unit on the first link while the second station transmits a second-bandwidth physical layer protocol data unit on the second link. In this aspect, "simultaneous transmitting/receiving" or "simultaneous" does not mean that a start time point and an end time point of transmitted data are strictly the same as a start time point and an end time point of received data respectively, and may mean that there is a non-empty intersection between the first-bandwidth PPDU and the second-bandwidth PPDU in terms of time.

### BRIEF DESCRIPTION OF DRAWINGS

To describe the technical solutions in the embodiments of this application or in the background more clearly, the following describes the accompanying drawings for describing the embodiments of this application or the background.
FIG. 1 is a schematic architectural diagram of a communication system according to an embodiment of this application;
FIG. 2 is a schematic diagram of association relationships between multi-link devices according to an embodiment of this application;
FIG. 3 is a schematic flowchart of a multi-link communication method according to an embodiment of this application;
FIG. 4 is a schematic diagram of a multi-band element according to an embodiment of this application;
FIG. 5 is a schematic diagram of other fields included in a multi-link element according to an embodiment of this application;
FIG. 6 is a schematic diagram of a reduced neighbor report element according to an embodiment of this application;
FIG. 7 is a schematic diagram of other fields included in a reduced neighbor report element according to an embodiment of this application;
FIG. 8 is a schematic diagram of a neighbor report element according to an embodiment of this application;
FIG. 9 is a schematic diagram of other fields included in a neighbor report element according to an embodiment of this application;
FIG. 10 is a schematic diagram of a transmitting/receiving capability information element according to an embodiment of this application;
FIG. 11 is a schematic flowchart of another multi-link communication method according to an embodiment of this application;
FIG. 12 is a schematic diagram of data transmission according to an embodiment of this application;
FIG. 13 is a schematic diagram depicting a structure of a first multi-link device according to an embodiment of this application;
FIG. 14 is a schematic diagram depicting a structure of a second multi-link device according to an embodiment of this application;
FIG. 15 is a schematic diagram depicting a structure of a first multi-link device according to an embodiment of this application; and
FIG. 16 is a schematic diagram depicting a structure of a second multi-link device according to an embodiment of this application.

### DESCRIPTION OF EMBODIMENTS

The following describes the embodiments of this application with reference to the accompanying drawings in the embodiments of this application.

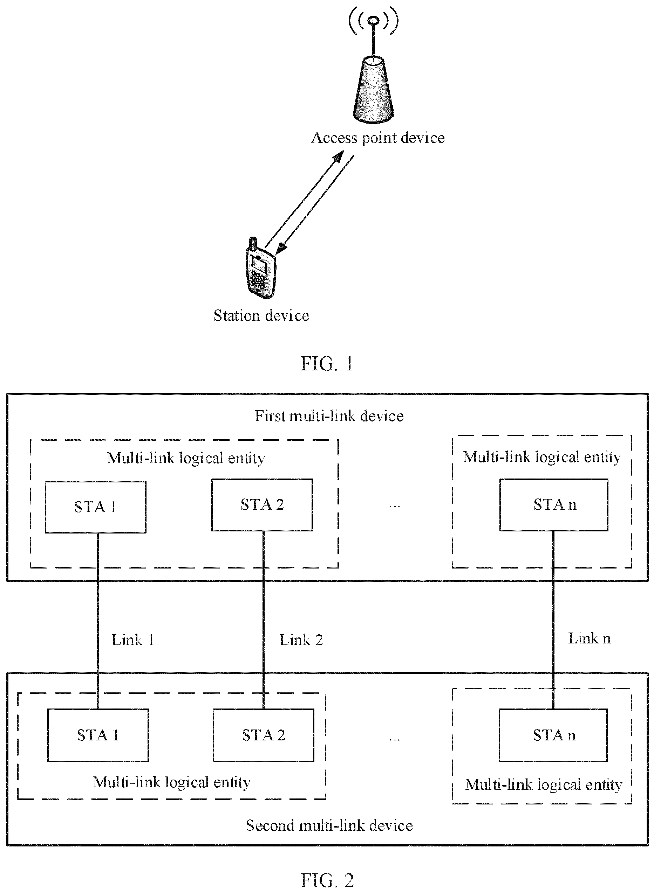

FIG. 1 is a schematic architectural diagram of a communication system according to an embodiment of this application. The communication system includes an access point device and a station device. A multi-link device in this embodiment of this application may be a station device, or may be an access point device. If the multi-link device is an access point device, the multi-link device includes one or more access points (access point, AP). If the multi-link device is a station device, the multi-link device includes one or more stations (station, STA). The architecture may also be extensively used in an application scenario in which a base station (base station, BS) and a terminal device (user equipment, UE) are included. The AP may be an access point used for a mobile user to access a wired network. The AP is mainly deployed inside a house, a building, and a campus, with a typical coverage radius of tens of meters to hundreds of meters. Certainly, the AP may alternatively be deployed outdoors. The AP is equivalent to a bridge that connects the wired network and a wireless network. The AP is mainly used to connect wireless network clients to each other, and then connect the wireless network to the Ethernet. Specifically, the AP may be a terminal device or network device with a Wi-Fi chip. The AP may be a device that supports the 802.11ax standard. Alternatively, the AP may be a device that supports a plurality of wireless local area network (wireless local area network, WLAN) standards such as 802.11ac, 802.11n, 802.11g, 802.11b, and 802.11a. The STA may be a wireless communication chip, a wireless sensor, or a wireless communication terminal. For example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the STA may support the 802.11ax standard. The STA may also support a plurality of WLAN standards such as 802.11ac, 802.11n, 802.11g, 802.11b, and 802.11a.

FIG. 2 is a schematic diagram of association relationships between multi-link devices according to an embodiment of this application. The multi-link devices shown in FIG. 2 include a first multi-link device and a second multi-link device. The first multi-link device or the second multi-link device each may include at least one multi-link logical entity. One multi-link logical entity may include one or more stations, and all the stations operate on different links. A STA 1 and a STA 2 in the first multi-link device belong to a multi-link logical entity, and a STA n in the first multi-link device belongs to another multi-link logical entity. A STA 1 and a STA 2 in the second multi-link device belong to a multi-link logical entity, and a STA n in the second multi-link device belongs to another multi-link logical entity. If the first multi-link device needs to communicate with the second multi-link device, each station in the first multi-link device needs to be associated with a corresponding station in the second multi-link device. As shown in FIG. 2, the STA 1 in the first multi-link device is associated with the STA 1 in the second multi-link device, and operates on a link 1. The STA 2 in the first multi-link device is associated with the STA 2 in the second multi-link device, and operates on a link 2. The STA n in the first multi-link device is associated with the STA n in the second multi-link device, and operates on a link n. In this way, each station in the first multi-link device may establish a connection to the corresponding station in the second multi-link device on a respective link, thereby implementing multi-link communication between the two multi-link devices.

As more application traffic is carried by a wireless network, a Wi-Fi system evolves toward a goal of a high rate. Multi-link aggregation communication has become an alternative feature of a next-generation WLAN technology, to increase a peak rate of a station in the multi-link device. The multi-link aggregation communication involves coordinated work between a plurality of links, but there are mutual restrictions between links. For example, it is difficult for a radio transceiver unit to support a full-duplex operation currently. Two links that are close to each other cannot implement simultaneous transmitting/receiving operations, while two links that are far away from each other can implement simultaneous transmitting/receiving operations. However, simultaneous transmitting/receiving capabilities of each link are not indicated in a conventional solution. This affects communication efficiency. If data is simultaneously transmitted and received on two links that do not support simultaneous transmitting/receiving operations, communication quality cannot be ensured. In addition, there is a primary link and a secondary link in multi-link transmission. When the primary link and the secondary link do not support simultaneous transmitting/receiving operations, the secondary link cannot transmit data while the primary link is receiving a data packet. However, because the secondary link itself does not perform backoff, the secondary link is transmitted only along with another primary link. This may cause interference and contention conflicts to data transmission on the primary link. To resolve the foregoing technical problem, the embodiments of this application provide the following solutions.

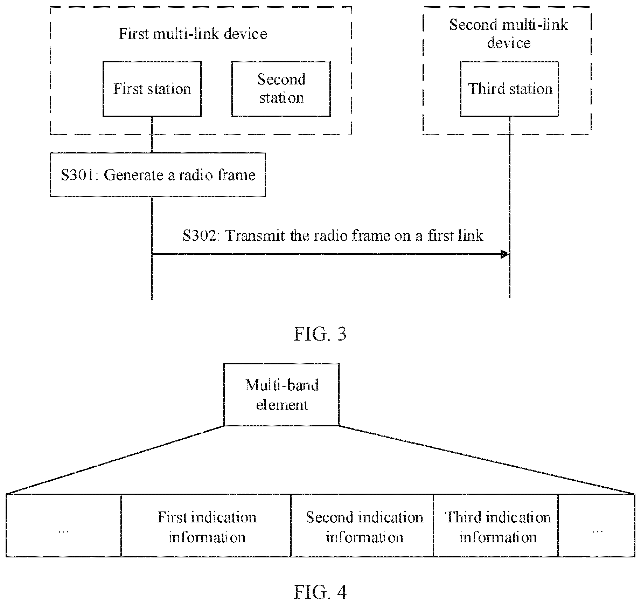

FIG. 3 is a schematic flowchart of a multi-link communication method according to an embodiment of this application. The method includes but is not limited to the following steps.

S301: A first station generates a radio frame, where the first station is one of a plurality of stations included in a first multi-link device, and the first multi-link device includes the first station operating on a first link and a second station operating on a second link.

It should be noted that a link is determined based on an operating frequency band of a station, or the operating frequency band and a channel of the station. A frequency band may include a plurality of channels. If a plurality of stations operate on different frequency bands, the plurality of stations operate on different links. Alternatively, if the plurality of stations operate on a same frequency band but different channels, the plurality of stations also operate on different links.

The first station and the second station each may be a non-AP STA, or may be an AP-STA. If both the first station and the second station are non-AP STAs, the radio frame may be a probe request frame, an authentication frame, an association request frame, or a re-association request frame. If both the first station and the second station are AP STAs, the radio frame may be a beacon frame, a probe response frame, an association response frame, an authentication frame, or a re-association response frame.

S302: The first station transmits the radio frame on the first link, and a third station in a second multi-link device receives the radio frame transmitted by the first station in the plurality of stations included in the first multi-link device, where the radio frame includes capability indication information, the capability indication information is used to indicate whether the first station and the second station support simultaneous transmitting/receiving operations, the third station in the second multi-link device may determine, based on the capability indication information, whether the first station and the second station support simultaneous transmitting/receiving operations.

It should be noted that the third station may be not a station in a multi-link device, but may operate on a single link. For example, the third station is a station operating on the first link.

Optionally, the capability indication information includes first indication information, and the first indication information is used to indicate whether the first station and the second station support simultaneous transmitting/receiving operations.

The simultaneous transmitting/receiving operations include a first operation and a second operation, where the first operation is that the second station performs a receiving operation while the first station performs a transmitting operation, and the second operation is that the second station performs a transmitting operation while the first station performs a receiving operation. The first operation may be alternatively that the second station performs a transmitting operation while the first station performs a receiving operation, and the second operation may be alternatively that the second station performs a receiving operation while the first station performs a transmitting operation. This is not limited herein. The first indication information includes 1-bit information, and the 1-bit information is used to indicate whether both the first station and the second station support the first operation and the second operation.

For example, the 1-bit information in the first indication information may be 0 or 1. If the 1-bit information is 1, it may indicate that both the first station and the second station support the first operation and the second operation. If the 1-bit information is 0, it indicates that neither the first station nor the second station supports both the first operation and the second operation. Functions indicated by 0 and 1 may alternatively be interchangeable. This is not limited herein.

The simultaneous transmitting/receiving operations include a first operation and a second operation. The first operation is that the second station performs a receiving operation while the first station performs a transmitting operation, and the second operation is that the second station performs a transmitting operation while the first station performs a receiving operation. Alternatively, the first operation may be that the second station performs a transmitting operation while the first station performs a receiving operation, and the second operation may be that the second station performs a receiving operation while the first station performs a transmitting operation. This is not limited herein. The first indication information includes 2-bit information, first-bit information in the 2-bit information is used to indicate whether the first station and the second station support the first operation, and second-bit information in the 2-bit information is used to indicate whether the first station and the second station support the second operation.

For example, the 2-bit information may include 00, 10, 01, or 11. 00 may indicate that neither the first station nor the second station supports the first operation and the second operation. 10 may indicate that the first station and the second station support the first operation but do not support the second operation. 01 may indicate that the first station and the second station do not support the first operation but support the second operation. 11 may indicate that both the first station and the second station support the first operation and support the second operation. Functions indicated by 0 and 1 may alternatively be interchangeable. This is not limited herein.

Optionally, the first indication information includes a plurality pieces of 1-bit information or a plurality pieces of 2-bit information. One piece of 1-bit information or one piece of 2-bit information is used to indicate whether the first station using a first bandwidth and the second station using a second bandwidth support simultaneous transmitting/receiving operations. The first bandwidth is a bandwidth at which the first station transmits data, and may include but is not limited to 20 MHz, 40 MHz, 80 MHz, 160 MHz, or 320 MHz. The second bandwidth is a bandwidth at which the second station transmits data, and may include but is not limited to 20 MHz, 40 MHz, 80 MHz, 160 MHz, or 320 MHz.

For example, the first station may transmit data at a bandwidth of 20 MHz, 40 MHz, or 80 MHz, and the second station may transmit data at a bandwidth of 80 MHz or 160 MHz. There are the following six channel bandwidth configurations for the first station and the second station. The first station transmits data at a bandwidth of 20 MHz, and the second station transmits data at a bandwidth of 80 MHz. Alternatively, the first station transmits data at a bandwidth of 20 MHz, and the second station transmits data at a bandwidth of 160 MHz. Alternatively, the first station transmits data at a bandwidth of 40 MHz, and the second station transmits data at a bandwidth of 80 MHz. Alternatively, the first station transmits data at a bandwidth of 40 MHz, and the second station transmits data at a bandwidth of 160 MHz. Alternatively, the first station transmits data at a bandwidth of 80 MHz, and the second station transmits data at a bandwidth of 80 MHz. Alternatively, the first station transmits data at a bandwidth of 80 MHz, and the second station transmits data at a bandwidth of 160 MHz. The foregoing six channel bandwidth configurations may be indicated by using six 1bits or six 2bits. For example, the foregoing six channel bandwidth configurations may be indicated by using six 1bits. If the first indication information is 100000, it may indicate that simultaneous transmitting/receiving operations performed by using the first channel bandwidth configuration are supported. To be specific, it is supported that the first station uses the bandwidth of 20 MHz to receive (or transmit) data, and that the second station uses the bandwidth of 80 MHz to transmit (or receive) data. If the first indication information is 001000, it may indicate that simultaneous transmitting/receiving operations performed by using the third channel bandwidth configuration are supported. To be specific, it is supported that the first station uses the bandwidth of 40 MHz to receive (or transmit) data, and that the second station uses the bandwidth of 80 MHz to transmit (or receive) data. The other channel bandwidth configurations are similar. Details are not described in this embodiment of this application.

Optionally, the capability indication information may include second indication information. The second indication information includes a threshold. The threshold is used to indicate a minimum value of a difference between operating frequencies of two links that support simultaneous transmitting/receiving operations. Specifically, after receiving the radio frame, the third station in the second multi-link device obtains an information element in the radio frame, where the information element includes identification information of the second link. The third node may determine, based on the identification information of the second link, an operating frequency of the second station that operates on the second link in the first multi-link device. The third node compares the operating frequency of the second station with an operating frequency of the first station that transmits the radio frame, to determine a difference between the operating frequency of the first station and the operating frequency of the second station. If the difference between the operating frequency of the first station and the operating frequency of the second station is greater than (or greater than or equal to) the threshold, the third station in the second multi-link device may determine that the first station and the second station in the first multi-link device support simultaneous transmitting/receiving operations. If the difference between the operating frequency of the first station and the operating frequency of the second station is less than or equal to (or less than) the threshold, the third station in the second multi-link device may determine that the first station and the second station in the first multi-link device do not support simultaneous transmitting/receiving operations. The threshold may be measured in a bandwidth width, for example, 5 MHz or 20 MHz.

Optionally, the capability indication information may include first indication information and second indication information. The second indication information includes a threshold. The first indication information is used to indicate whether the first station and the second station support simultaneous transmitting/receiving operations when a difference between an operating frequency of the first station and an operating frequency of the second station is greater than the threshold. Further, after receiving the radio frame, if the third station in the second multi-link device determines that the difference between the operating frequency of the first station and the operating frequency of the second station is greater than (or greater than or equal to) the threshold, and determines, based on the first indication information, that the first station and the second station support simultaneous transmitting/receiving operations, the third station may determine that the first station and the second station support simultaneous transmitting/receiving operations. Alternatively, if the third station determines that the difference between the operating frequency of the first station and the operating frequency of the second station is greater than (or greater than or equal to) the threshold, but determines, based on the first indication information, that the first station and the second station do not support simultaneous transmitting/receiving operations, the third station may determine that the first station and the second station do not support simultaneous transmitting/receiving operations. If the third station determines that the difference between the operating frequency of the first station and the operating frequency of the second station is less than or equal to the threshold, regardless of whether the first indication information indicates simultaneous transmitting/receiving operations are supported or not, the third station determines that the first station and the second station do not support simultaneous transmitting/receiving operations. Optionally, the first indication information is set to a reserved value.

Optionally, the first multi-link device includes at least one multi-link logical entity (multi-link logical entity, MLO entity). The multi-link logical entity includes at least one station. The capability indication information includes third indication information. The third indication information is used to indicate whether the first station and the second station are located in a same multi-link logical entity. Further, if the first station and the second station are located in a same MLO entity, the first station and the second station may transmit data frames of a same service type (traffic ID, TID) in a multi-link aggregation communication manner. If the first station and the second station are located in different MLO entities, the first station and the second station may transmit data frames in a multi-link aggregation communication manner, where the data frames are data frames of different service types.

Optionally, the radio frame includes an information element. The capability indication information is carried in the information element. The information element includes identification information of the second link. The information element may be a multi-band element (multi-band element), a reduced neighbor report element (reduced neighbor report element, RNR element), or a neighbor report element (neighbor report element). The multi-band element may be used to indicate a link on which the second station operates. The RNR element and the neighbor report element may be used to indicate a neighbor node probed by the first station, and are used to carry information about the probed neighbor node. The neighbor node may be a station other than the first station of the first multi-link device, that is, the second station. One or more of the first indication information, the second indication information, and the third indication information may be carried in the multi-band element, the RNR element, or the neighbor report element.

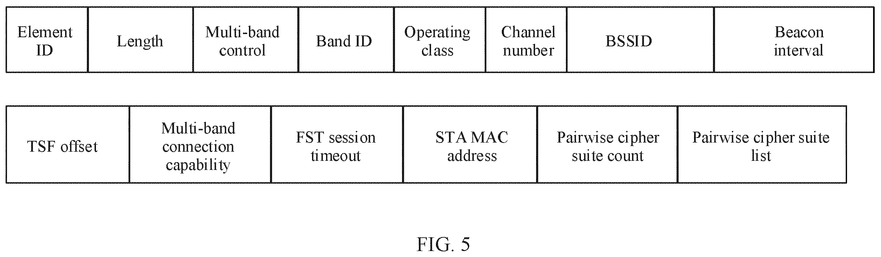

For example, FIG. 4 is a schematic diagram of a multi-band element according to an embodiment of this application. The multi-band element may include one or more of a first indication information field, a second indication information field, and a third indication information field. Quantities of bits of the first indication information field, the second indication information field, and the third indication information field are not limited, and locations of the first indication information field, the second indication information field, and the third indication information field are not limited either. The quantity of bits may be 1 or 2. Optionally, the multi-band element may further include other fields. Optionally, a part represented by ellipses in FIG. 4 may include a plurality of fields shown in FIG. 5. The plurality of fields may include a band ID (band ID) field, a channel number (channel number) field, and an operating class (operating class) field. The band ID field, the channel number field, and the operating class field may be used to indicate the second link on which the second station operates. Optionally, the plurality of fields may further include an element ID (element ID) field, a length (length) field, a multi-band control (multi-band control) field, a beacon interval (beacon interval) field, a multi-band connection capability (multi-band connection capability) field, a STA MAC address (STA MAC address) field, and the like. The locations of the first indication information field, the second indication information field, the third indication information field, and locations of the plurality of fields shown in FIG. 5 in the multi-band element are not limited.

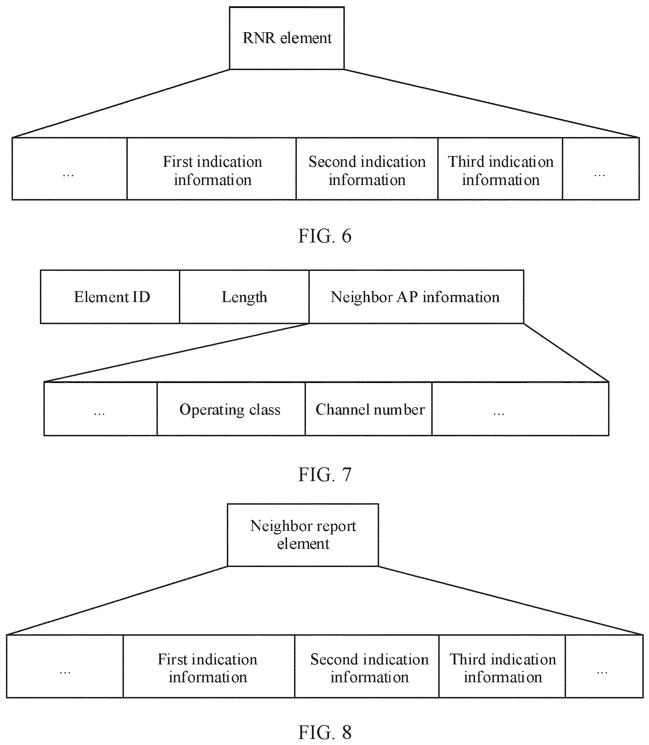

FIG. 6 is a schematic diagram of a reduced neighbor report element RNR element according to an embodiment of this application. The RNR element may include one or more of a first indication information field, a second indication information field, and a third indication information field. Quantities of bits of the first indication information field, the second indication information field, and the third indication information field are not limited, and locations of the first indication information field, the second indication information field, and the third indication information field are not limited either. The quantity of bits may be 1 or 2. Optionally, the RNR element may further include other fields. Optionally, a part represented by ellipses in FIG. 6 may include a plurality of fields shown in FIG. 7. The plurality of fields may include a neighbor AP information (neighbor AP information) field, and the neighbor AP information field may further include a channel number (channel number) field and an operating class (operating class) field. Optionally, the plurality of fields may further include an element ID (element ID) field, a length (length) field, and the like. The locations of the first indication information field, the second indication information field, the third indication information field, and locations of the plurality of fields shown in FIG. 7 in the RNR element are not limited.

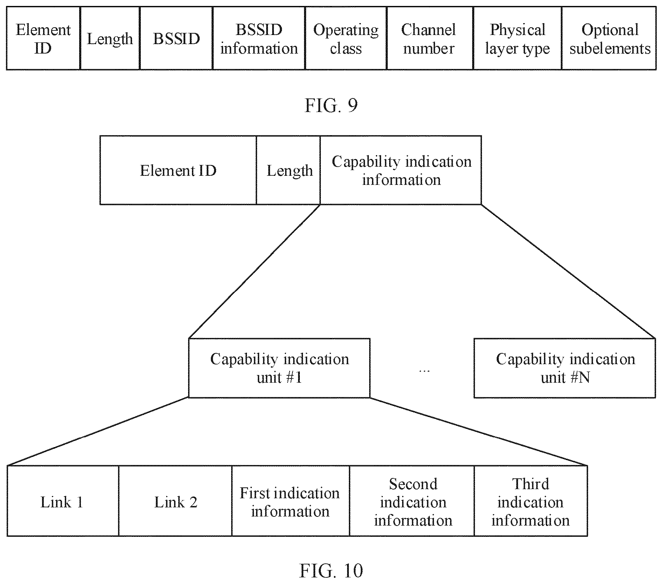

FIG. 8 is a schematic diagram of a neighbor report element neighbor report element according to an embodiment of this application. The neighbor report element may include one or more of a first indication information field, a second indication information field, and a third indication information field. Quantities of bits of the first indication information field, the second indication information field, and the third indication information field are not limited, and locations of the first indication information field, the second indication information field, and the third indication information field are not limited either. The quantity of bits may be 1 or 2. The neighbor report element may further include other fields. Optionally, a part represented by ellipses in FIG. 8 may include a plurality of fields shown in FIG. 9. The plurality of fields may include a channel number (channel number) field and an operating class (operating class) field. Optionally, the plurality of fields may further include an element ID (element ID) field, a length (length) field, and a basic service set ID (basic service set ID, BSSID) field, a BSSID information (BSSID information) field, an optional subelements (optional subelements) field, and the like. The locations of the first indication information field, the second indication information field, the third indication information field, and locations of the plurality of fields shown in FIG. 9 in the neighbor report element are not limited.

The multi-band element (or the RNR element or the neighbor report element) is carried in the radio frame transmitted on the first link, and carries an identifier of the second link. The third station that receives the multi-band element on the first link may determine, based on the second link indicated by the multi-band element, the first indication information and/or the second indication information, whether the first station on the first link and the second station on the second link support simultaneous transmitting/receiving operations. In this way, the multi-band element (or the RNR element or the neighbor report element) of the first link may not be carried. This can reduce signaling overheads.

Optionally, the radio frame includes a newly-defined transmitting/receiving capability information element. The transmitting/receiving capability information element includes an element ID field, a length field, and a capability indication information field. The capability indication information includes a link identifier of the first link and the link identifier of the second link. The transmitting/receiving capability information element may be used to indicate whether the first station and the second station support simultaneous transmitting/receiving operations, so that whether the first station operating on the first link and any station operating on another link in the first multi-link device support simultaneous transmitting/receiving operations can be indicated by using the transmitting/receiving capability information element, without a need to be indicated by using information elements one by one. This reduces signaling overheads.

For example, FIG. 10 is a schematic diagram of a transmitting/receiving capability information element according to an embodiment of this application. The transmitting/receiving capability information element may include an element ID field, an element length field, and a capability indication information field. The capability indication information field may further include N capability indication units, where N is an integer greater than or equal to 1. A capability indication unit may include two link identifiers that need to be indicated for the first multi-link device. For example, a capability indication unit #1 may include a link identifier of a link 1 and a link identifier of a link 2, indicating that a station operating on the link 1 and a station operating on the link 2 in the first multi-link device can support simultaneous transmitting/receiving operations. A capability indication unit #2 may include a link identifier of a link 3 and a link identifier of a link 4, indicating that a station operating on the link 3 and a station operating on the link 4 in the first multi-link device can support simultaneous transmitting/receiving operations. Functions of other capability indication units are similar. Details are not described in this embodiment of this application again. The link identifier may include a band ID (band ID), an operating class (operating class), a channel number (channel number), and the like. Optionally, the capability indication unit may further include one or more of first indication information, second indication information, third indication information, and the like. Functions of the first indication information, the second indication information, and the third indication information are described in detail above. Details are not described in this embodiment of this application again.

It should be noted that the capability indication information included in the radio frame transmitted by the first multi-link device may be used to indicate whether the first station operating on the first link and the second station operating on the second link support simultaneous transmitting/receiving operations. The capability indication information may also be used to indicate whether the first station operating on the first link and a plurality of stations operating on a plurality of other links in the first multi-link device support simultaneous transmitting/receiving operations.

In this embodiment of this application, the capability indication information is carried in the radio frame to indicate whether the first station operating on the first link and the second station operating on the second link in the first multi-link device support simultaneous transmitting/receiving operations. Another station that receives the capability indication information can determine whether the first station and the second station in the first multi-link device can support simultaneous transmitting/receiving of data. If the first station and the second station support simultaneous transmitting/receiving of data, the another station may perform simultaneous transmitting/receiving with the first station and the second station, thereby improving communication efficiency. If the first station and the second station do not support simultaneous transmitting/receiving of data, the another station may avoid performing simultaneous transmitting/receiving with the first station and the second station, thereby ensuring communication quality.

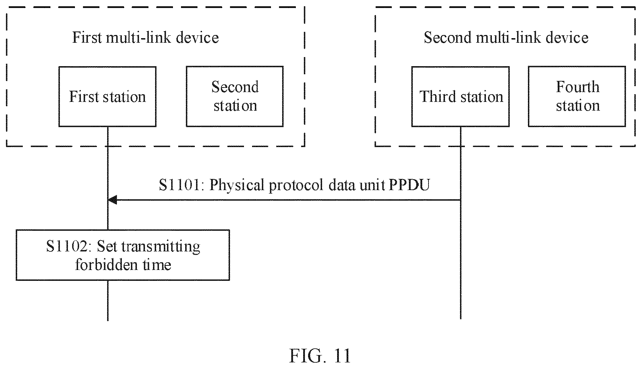

FIG. 11 is a schematic flowchart of another multi-link communication method according to an embodiment of this application. The method includes but is not limited to the following steps.

S1101: A second multi-link device transmits a physical protocol data unit (PHY protocol data unit, PPDU) to a first multi-link device on a primary link, and the first multi-link device receives, on the primary link, the PPDU transmitted by the second multi-link device, where there are a plurality of links between the first multi-link device and the second multi-link device, and the plurality of links include the primary link and a secondary link adjacent to the primary link.

In FIG. 11, the first multi-link device includes a first station and a second station, and the second multi-link device includes a third station and a fourth station. A link between the first station and the third station is the primary link, and a link between the second station and the fourth station is the secondary link. When the primary link and the secondary link are close to each other, if the first station and the second station in the first multi-link device simultaneously transmit and receive data, the secondary link causes interference and contention conflicts to data transmission on the primary link. It may be understood that the second multi-link device may not be a device operating on a multi-link, but a device operating on a single link, for example, the primary link.

S1102: The first multi-link device sets transmitting forbidden time, where the transmitting forbidden time is used to indicate a period of time in which a station operating on the secondary link in the first multi-link device is forbidden from transmitting data.

Optionally, when determining that the PPDU is transmitted to the first multi-link device, the first multi-link device may set the transmitting forbidden time.

Specifically, the first station in the first multi-link device may first determine the transmitting forbidden time, and then transmit a notification message to the second station, where the notification message includes the transmitting forbidden time. After receiving the notification message, the second station sets the transmitting forbidden time on the secondary link. The transmitting forbidden time may alternatively be determined and set by a module in the first multi-link device. This is not limited herein. The transmitting forbidden time includes a start time point and an end time point. Alternatively, the transmitting forbidden time includes a start time point and a time length. The time length is calculated by subtracting the start time point from the end time point of the transmitting forbidden time. Optionally, the time length is used to set a timer. For example, the second station may set a timer based on the time length, and before a value of the timer decreases to 0, the second station does not transmit data. In other words, when the first station of the first multi-link device receives data, the second station of the first multi-link device is forbidden from transmitting data within a time window indicated by the transmitting forbidden time.

In another possible implementation, transmitting forbidden time on the secondary link includes only one time length, and the secondary link cannot transmit data within the time length. The time length may be calculated by subtracting a start point from an end point of the transmitting forbidden time, and the time length is used to set a timer.

The start time point may be a time point in a physical layer preamble, for example, a time point at which a signaling field in the physical layer preamble is obtained. "Obtaining" may also be construed as receiving, parsing, or detecting. The start time point may alternatively be a time point at which that a receive address (receive address, RA) in a media access control MAC header in the PPDU matches an address of a station operating on the primary link is determined. The start time point may alternatively be a time point at which a frame check sequence (frame check sequence, FCS) is received and a data packet is received correctly.

The end time point may be an end time point of the PPDU. The end time point may alternatively be an end time point at which the station operating on the primary link in the first multi-link device responds to a block acknowledgment (block acknowledgment, BA) of the PPDU. The end time point may alternatively be a time point at which the station operating on the primary link in the first multi-link device responds to the BA of the PPDU plus a short interframe space (short interframe space, SIFS). The end time point may alternatively be an end time point of a transmission opportunity (transmission opportunity, TXOP) to which the PPDU belongs.

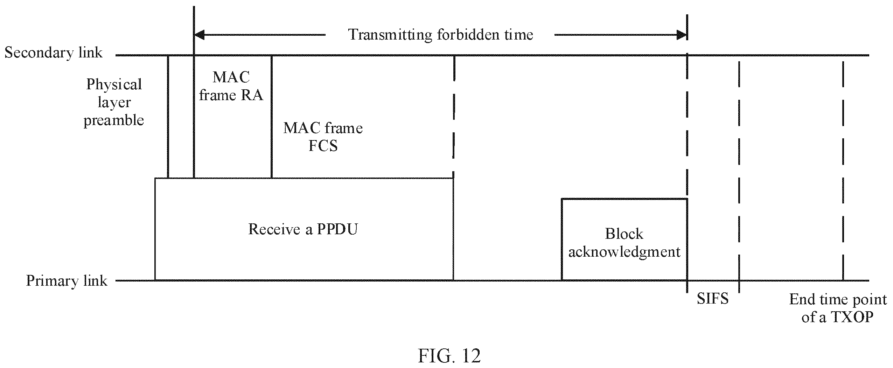

FIG. 12 is a schematic diagram of data transmission according to an embodiment of this application. A first multi-link device receives, on a primary link, a PPDU transmitted by a second multi-link device. In the process of receiving the PPDU, there are three time points (represented by vertical solid lines in the figure) from left to right: a time point in a physical layer preamble, a time point at which that an RA in a MAC header in the PPDU matches an address of a station operating on the primary link is determined, and a time point at which an FCS is received and a data packet is received correctly. Any one of the time points may be used as a start time point of transmitting forbidden time. After receiving the PPDU, the first multi-link device returns, on the primary link, a block acknowledgment BA to the second multi-link device. There are four time points (represented by vertical dotted lines in the figure) from receiving completion of the PPDU to an end of a TXOP from left to right: an end time point of the PPDU, an end time point of a block acknowledgment BA responding to the PPDU, a time point of the BA in response to the PPDU plus a short interframe space SIFS, and an end time point of the transmission opportunity TXOP to which the PPDU belongs. Any of the time points may be used as the end time point. For example, in the transmitting forbidden time shown in FIG. 12, the time point at which that the RA in the MAC header in the PPDU matches the address of the station operating on the primary link is determined is used as the start time point, and the end time point at which the block acknowledgment BA in response to the PPDU is used as the end time point.

Optionally, when the secondary link is adjacent to a plurality of primary links, the plurality of primary links may participate in setting transmitting forbidden time for the secondary link. One primary link corresponds to one transmitting forbidden time. The start time point is a smallest start value of a plurality of transmitting forbidden time corresponding to the plurality of primary links. The end time point is a largest end value of the plurality of transmitting forbidden time corresponding to the plurality of primary links. The time length is a largest value of a plurality of time lengths corresponding to the plurality of primary links. Therefore, it is ensured that the transmitting forbidden time set for the secondary link can meet requirements of the plurality of primary links, and no interference or no contention conflict is caused to all the primary links.

Optionally, when the secondary link is adjacent to a plurality of primary links, transmitting forbidden time may be set for each primary link in the foregoing manner of setting the start time point and the end time point, and the plurality of transmitting forbidden time is recorded on the secondary link. When receiving is performed on a primary link, a first multi-link station sets, on the secondary link, transmitting forbidden time corresponding to the primary link, so that the transmitting forbidden time is set more precisely for each primary link.

In this embodiment of this application, in multi-link aggregation (aggregation between the primary link and the secondary link) communication, data is forbidden to be transmitted on the secondary link by setting the transmitting forbidden time, to avoid simultaneous transmitting/receiving of data on adjacent links. This reduces interference and contention conflicts for the primary link.

The foregoing describes in detail the method in the embodiments of this application. The following provides apparatuses in the embodiments of this application.

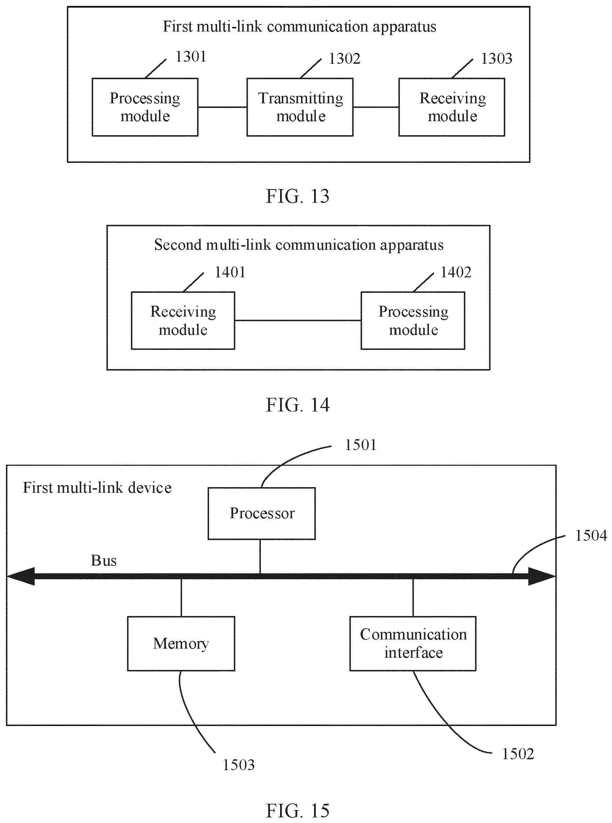

FIG. 13 is a schematic diagram depicting a structure of a first multi-link device according to an embodiment of this application. The first multi-link device may be configured to implement any method and function related to the first multi-link device in any of the foregoing embodiments. The first multi-link device may include a processing module 1301, a transmitting module 1302, and a receiving module 1303. Optionally, the transmitting module 1302 and the receiving module 1303 respectively correspond to a baseband circuit and a radio frequency circuit included in the first multi-link device. Detailed descriptions of the modules are as follows.

In an embodiment:
the processing module 1301 is configured to generate a radio frame by using a first station, where the first station is one of a plurality of stations included in the first multi-link device, and the first multi-link device includes the first station operating on a first link and a second station operating on a second link;
the transmitting module 1302 is configured to transmit the radio frame on the first link by using the first station, where the radio frame includes capability indication information, and the capability indication information is used to indicate whether the first station and the second station support simultaneous transmitting/receiving operations, and
the processing module 1301 and the transmitting module 1302 may be modules in the foregoing first station. For content and functions of elements or fields included in the radio frame, refer to descriptions in the foregoing method embodiments. Details are not described herein again.

In another embodiment:
the receiving module 1303 is configured to receive, on a primary link, a physical protocol data unit PPDU transmitted by a second multi-link device, where there are a plurality of links between the first multi-link device and the second multi-link device, and the plurality of links include the primary link and a secondary link adjacent to the primary link; and
the processing module 1301 is configured to set transmitting forbidden time, where the transmitting forbidden time is used to indicate a period of time in which a station operating on the secondary link in the first multi-link device is forbidden from transmitting data.

For a method for determining and setting the transmitting forbidden time, refer to descriptions in the foregoing method embodiments. Details are not described herein again.

It should be noted that, for implementation of the modules, refer to corresponding descriptions of the method embodiments shown in FIG. 3 and FIG. 11. The modules are configured to perform the method and the functions performed by the first multi-link device in the foregoing embodiment.

FIG. 14 is a schematic diagram depicting a structure of a second multi-link device according to an embodiment of this application. The second multi-link device may be configured to implement any method and function related to the second multi-link device in any of the foregoing embodiments. The second multi-link device may include a receiving module 1401 and a processing module 1402. Optionally, the receiving module 1401 and the processing module 1402 may be modules in the foregoing described third station, and the receiving module 1401 corresponds to a baseband circuit included in the third station. Detailed descriptions of the modules are as follows.

The receiving module 1401 is configured to receive, by using the third station, a radio frame transmitted by a first station in a plurality of stations included in a first multi-link device. The first multi-link device includes the first station operating on a first link and a second station operating on a second link.

The radio frame includes capability indication information, and the capability indication information is used to indicate whether the first station and the second station support simultaneous transmitting/receiving operations.

The processing module 1402 is configured to determine, by using the third station based on the capability indication information, whether the first station and the second station support simultaneous transmitting/receiving operations.

For content and functions of elements or fields included in the radio frame, refer to descriptions in the foregoing method embodiments. Details are not described herein again.

It should be noted that, for implementation of the modules, refer to corresponding descriptions of the method embodiments shown in FIG. 3 and FIG. 11. The modules are configured to perform the method and the functions performed by the second multi-link device in the foregoing embodiment.

FIG. 15 is a schematic diagram depicting a structure of a first multi-link device according to an embodiment of this application. As shown in FIG. 15, the first multi-link device may include at least one processor 1501, at least one communication interface 1502, at least one memory 1503, and at least one communication bus 1504.

The processor 1501 may be a central processing unit, a general-purpose processor, a digital signal processor, an application-specific integrated circuit, a field programmable gate array or another programmable logic device, a transistor logic device, a hardware component, or any combination thereof. The processor may implement or execute various examples of logical blocks, modules, and circuits described with reference to the content disclosed in this application. Alternatively, the processor may be a combination of processors implementing a computing function, for example, a combination of one or more microprocessors, or a combination of a digital signal processor and a microprocessor. The communication bus 1504 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 15, but this does not mean that there is only one bus or only one type of bus. The communication bus 1504 is configured to implement connections and communication between these components. The communication interface 1502 in the device in this embodiment of this application is configured to perform signaling or data communication with another node device. The memory 1503 may include a volatile memory, for example, a nonvolatile random access memory (nonvolatile random-access memory, NVRAM), a phase-change random-access memory (phase-change RAM, PRAM), a magnetoresistive random-access memory (magnetoresistive RAM, MRAM), or the like. The memory 1503 may further include a nonvolatile memory, for example, at least one magnetic disk storage device, an electrically erasable programmable read-only memory (electrically erasable programmable read-only memory, EEPROM), a flash storage device such as a NOR flash memory (NOR flash memory) or a NAND flash memory (NAND flash memory), or a semiconductor device such as a solid state disk (solid state disk, SSD). Optionally, the memory 1503 may be at least one storage apparatus far away from the processor 1501. Optionally, the memory 1503 may further store a group of program code. Optionally, the processor 1501 may further execute the program stored in the memory 1503.

In an embodiment, the processor 1501 is configured to perform the following operations:
generating a radio frame by using a first station, where the first station is one of a plurality of stations included in the first multi-link device, and the first multi-link device includes the first station operating on a first link and a second station operating on a second link; and
transmitting the radio frame on the first link by using the first station, where the radio frame includes capability indication information, and the capability indication information is used to indicate whether the first station and the second station support simultaneous transmitting/receiving operations.

For content and functions of elements or fields included in the radio frame, refer to descriptions in the foregoing method embodiments. Details are not described herein again.

In another embodiment, the processor 1501 is further configured to perform the following operations:
receiving, on a primary link, a physical protocol data unit PPDU transmitted by a second multi-link device, where there are a plurality of links between the first multi-link device and the second multi-link device, and the plurality of links include the primary link and a secondary link adjacent to the primary link; and
setting transmitting forbidden time, where the transmitting forbidden time is used to indicate a period of time in which a station operating on the secondary link in the first multi-link device is forbidden from transmitting data.

For a method for determining and setting the transmitting forbidden time, refer to descriptions in the foregoing method embodiments. Details are not described herein again.

Further, the processor may further perform the operations of the first multi-link device in the foregoing embodiments of this application by collaborating with the memory and the communication interface.

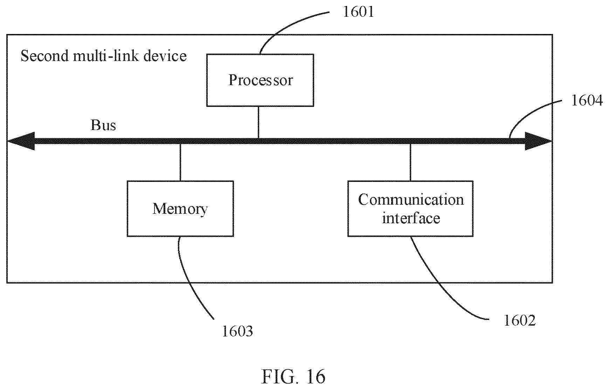

FIG. 16 is a schematic diagram depicting a structure of a second multi-link device according to an embodiment of this application. As shown in figure, the second multi-link device may include at least one processor 1601, at least one communication interface 1602, at least one memory 1603, and at least one communication bus 1604.

The processor 1601 may be the various types of processors described above. The communication bus 1604 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 16, but this does not mean that there is only one bus or only one type of bus. The communication bus 1604 is configured to implement connections and communication between these components. The communication interface 1602 in the device in this embodiment of this application is configured to perform signaling or data communication with another node device. The memory 1603 may be the various types of memories described above. Optionally, the memory 1603 may be at least one storage apparatus far away from the processor 1601. The memory 1603 stores a group of program code, and the processor 1601 executes the program in the memory 1603.

The processor 1601 receives, by using a third station, a radio frame transmitted by a first station in a plurality of stations included in a first multi-link device. The first multi-link device includes the first station operating on a first link and a second station operating on a second link.

The radio frame includes capability indication information, and the capability indication information is used to indicate whether the first station and the second station support simultaneous transmitting/receiving operations.

The processor 1601 determines, by using the third station based on the capability indication information, whether the first station and the second station support simultaneous transmitting/receiving operations.

For content and functions of elements or fields included in the radio frame, refer to descriptions in the foregoing method embodiments. Details are not described herein again.

Further, the processor may further perform the operations of the second multi-link device in the foregoing embodiments of this application by collaborating with the memory and the communication interface.

An embodiment of this application further provides a chip system. The chip system includes a processor, configured to support a first multi-link device or a second multi-link device to implement a function in any one of the foregoing embodiments, for example, to generate or process data and/or information in the foregoing method. In a possible design, the chip system may further include a memory. The memory is used store program instructions and data that are necessary for the first multi-link device or the second multi-link device. The chip system may include a chip, or may include a chip and another discrete component.

An embodiment of this application further provides a processor, coupled to a memory. The processor is configured to perform any method and function related to the first multi-link device or the second multi-link device in any one of the foregoing embodiments.

An embodiment of this application further provides a computer program product including instructions. When the computer program product runs on a computer, the computer performs any method and function related to the first multi-link device or the second multi-link device in any one of the foregoing embodiments.

An embodiment of this application further provides an apparatus. The apparatus is configured to perform any method and function related to the first multi-link device or the second multi-link device in any one of the foregoing embodiments.

An embodiment of this application further provides a wireless communication system. The system includes at least one first multi-link device and at least one second multi-link device in any one of the foregoing embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

## Claims

1. A multi-link communication method, comprising:
generating (S301), by a first multi-link device, a radio frame, wherein the first multi-link device comprises a first station operating on a first link and a second station operating on a second link; and
transmitting (S302), by the first multi-link device, the radio frame on the first link, wherein the radio frame comprises an information element, the information element comprises second indication information, the second indication information comprises a threshold, and the threshold is used to indicate a minimum value of a difference between operating frequencies of two links that support simultaneous transmitting/receiving operations.

2. A multi-link communication method, comprising:
receiving (S302), by a third station, a radio frame transmitted by a first multi-link device, wherein the first multi-link device comprises a first station operating on a first link and a second station operating on a second link, wherein the radio frame comprises an information element, wherein the information element comprises second indication information, the second indication information comprises a threshold, and the threshold is used to indicate a minimum value of a difference between operating frequencies of two links that support the simultaneous transmitting/receiving operations,
obtaining, by the third station, the threshold from the radio frame.

3. The method according to claim 1 or 2, wherein the simultaneous transmitting/receiving operations comprise a first operation and a second operation, the first operation is that the second station performs a receiving operation while the first station performs a transmitting operation, and the second operation is that the second station performs a transmitting operation while the first station performs a receiving operation.

4. The method according to claim 3, wherein the information element comprises first indication information, wherein the first indication information comprises 1-bit information, and the 1 bit information is used to indicate whether both the first station and the second station support the first operation and the second operation.

5. The method according to claim 3 or 4, wherein the first indication information comprises 2-bit information, first-bit information in the 2-bit information is used to indicate whether the first station and the second station support the first operation, and second-bit information in the 2-bit information is used to indicate whether the first station and the second station support the second operation.

6. The method according to any one of claims 3 to 5, wherein the first indication information comprises a plurality pieces of 1-bit information or a plurality pieces of 2-bit information, and one piece of 1-bit information or one piece of 2-bit information is used to indicate whether the first station using a first bandwidth and the second station using a second bandwidth support simultaneous transmitting/receiving operations.

7. The method according to any one of claims 1 to 6, wherein the first multi-link device comprises at least one multi-link logical entity, the multi-link logical entity comprises at least one station, the information element comprises third indication information, and the third indication information is used to indicate whether the first station and the second station are located in a same multi-link logical entity.

8. The method according to any one of claims 1 to 6, wherein the information element comprises identification information of the second link; and the information element comprises a multi-band element, a reduced neighbor report element, or a neighbor report element.

9. The method according to any one of claims 1 to 8, wherein the radio frame comprises a transmitting/receiving capability information element, the transmitting/receiving capability information element comprises an element ID, an element length, and the capability indication information, and the capability indication information comprises a link identifier of the first link and a link identifier of the second link.

10. The method according to any one of claims 1 to 9, wherein the first station and the second station are non-access point, AP, stations, STAs, wherein the radio frame is a probe request frame, an authentication frame, an association request frame, or a re-association request frame.

11. The method according to any one of claims 1 to 9, wherein the first station and the second station are access point, AP, stations, STAs, wherein the radio frame is a beacon frame, a probe response frame, an association response frame, an authentication frame, or a re-association response frame.

12. A computer-readable storage medium, the computer-readable storage medium storing instructions which, when the instructions are run on a computer, cause the computer to perform the method according to any one of claims 1 to 11.

13. An apparatus, configured to perform the method according to any one of claims 1 to 11.

## Patentansprüche

1. Multi-Link-Kommunikationsverfahren, umfassend:
Erzeugen (S301), durch eine erste Multi-Link-Vorrichtung, eines Funkrahmens, wobei die erste Multi-Link-Vorrichtung eine erste Station, die auf einer ersten Verbindung operiert, und eine zweite Station, die auf einer zweiten Verbindung operiert, umfasst; und
Übertragen (S302), durch die erste Multi-Link-Vorrichtung, des Funkrahmens auf der ersten Verbindung, wobei der Funkrahmen ein Informationselement umfasst, das Informationselement eine zweite Indikationsinformation umfasst, die zweite Indikationsinformation einen Schwellenwert umfasst, und der Schwellenwert dazu verwendet wird, einen Minimalwert einer Differenz zwischen Betriebsfrequenzen von zwei Verbindungen, die gleichzeitige Sende-/Empfangsoperationen unterstützen, zu indizieren.

2. Multi-Link-Kommunikationsverfahren, umfassend:
Empfangen (S302), durch eine dritte Station, eines Funkrahmens, der durch eine erste Multi-Link-Vorrichtung übertragen wird, wobei die erste Multi-Link-Vorrichtung eine erste Station, die auf einer ersten Verbindung operiert, und eine zweite Station, die auf einer zweiten Verbindung operiert, umfasst, wobei der Funkrahmen ein Informationselement umfasst, wobei das Informationselement eine zweite Indikationsinformation umfasst, die zweite Indikationsinformation einen Schwellenwert umfasst, und der Schwellenwert dazu verwendet wird, einen Minimalwert einer Differenz zwischen Betriebsfrequenzen von zwei Verbindungen, die die gleichzeitigen Sende-/Empfangsoperationen unterstützen, zu indizieren;
Erhalten, durch die dritte Station, des Schwellenwerts von dem Funkrahmen.

3. Verfahren nach Anspruch 1 oder 2, wobei die gleichzeitigen Sende-/Empfangsoperationen eine erste Operation und eine zweite Operation umfassen, die erste Operation darin besteht, dass die zweite Station eine Empfangsoperation durchführt, während die erste Station eine Sendeoperation durchführt, und die zweite Operation darin besteht, dass die zweite Station eine Sendeoperation durchführt, während die erste Station eine Empfangsoperation durchführt.

4. Verfahren nach Anspruch 3, wobei das Informationselement eine erste Indikationsinformation umfasst, wobei die erste Indikationsinformation eine 1-Bit-Information umfasst, und die 1-Bit-Information dazu verwendet wird, zu indizieren, ob sowohl die erste Station als auch die zweite Station die erste Operation und die zweite Operation unterstützen.

5. Verfahren nach Anspruch 3 oder 4, wobei die erste Indikationsinformation eine 2-Bit-Information umfasst, eine Information des ersten Bits in der 2-Bit-Information dazu verwendet wird, zu indizieren, ob die erste Station und die zweite Station die erste Operation unterstützen, und eine Information des zweiten Bits in der 2-Bit-Information dazu verwendet wird, zu indizieren, ob die erste Station und die zweite Station die zweite Operation unterstützen.

6. Verfahren nach einem der Ansprüche 3 bis 5, wobei die erste Indikationsinformation mehrere Teile von 1-Bit-Information oder mehrere Teile von 2-Bit-Information umfasst, und ein Teil von 1-Bit-Information oder ein Teil von 2-Bit-Information dazu verwendet wird, zu indizieren, ob die erste Station, die eine erste Bandbreite verwendet, und die zweite Station, die eine zweite Bandbreite verwendet, gleichzeitige Sende-/Empfangsoperationen unterstützen.

7. Verfahren nach einem der Ansprüche 1 bis 6, wobei die erste Multi-Link-Vorrichtung mindestens eine logische Multi-Link-Einheit umfasst, die logische Multi-Link-Einheit mindestens eine Station umfasst, das Informationselement eine dritte Indikationsinformation umfasst, und die dritte Indikationsinformation dazu verwendet wird, anzugeben, ob sich die erste Station und die zweite Station in einer selben logischen Multi-Link-Einheit befinden.

8. Verfahren nach einem der Ansprüche 1 bis 6, wobei das Informationselement eine Identifikationsinformation der zweiten Verbindung umfasst; und das Informationselement ein Multi-Band-Element, ein Element für reduzierten Nachbarschaftsbericht oder ein Nachbarschaftsberichtselement umfasst.

9. Verfahren nach einem der Ansprüche 1 bis 8, wobei der Funkrahmen ein Informationselement für Sende-/Empfangsfähigkeit umfasst, das Informationselement für Sende-/Empfangsfähigkeit eine Element-ID, eine Elementlänge und die Fähigkeitsangabeinformation umfasst, und die Fähigkeitsangabeinformation eine Verbindungskennung der ersten Verbindung und eine Verbindungskennung der zweiten Verbindung umfasst.

10. Verfahren nach einem der Ansprüche 1 bis 9, wobei die erste Station und die zweite Station Nicht-Zugangspunkt, AP-, Stationen, STAs, sind, wobei der Funkrahmen ein Sondierungsanforderungsrahmen, ein Authentifizierungsrahmen, ein Zuordnungsanforderungsrahmen oder ein Wiederholungszuordnungsanforderungsrahmen ist.

11. Verfahren nach einem der Ansprüche 1 bis 9, wobei die erste Station und die zweite Station Zugangspunkt, AP-, Stationen, STAs, sind, wobei der Funkrahmen ein Beaconrahmen, ein Sondierungsantwortrahmen, ein Zuordnungsantwortrahmen, ein Authentifizierungsrahmen oder ein Wiederholungszuordnungsantwortrahmen ist.

12. Computerlesbares Speichermedium, wobei das computerlesbare Speichermedium Anweisungen speichert, die, wenn die Anweisungen auf einem Computer ausgeführt werden, den Computer veranlassen, das Verfahren nach einem der Ansprüche 1 bis 11 auszuführen.

13. Vorrichtung, die konfiguriert ist zum Ausführen des Verfahrens nach einem der Ansprüche 1 bis 11.

## Revendications

1. Procédé de communication multiliaison, comprenant :
générer (S301), par un premier dispositif multiliaison, une trame radio, dans lequel le premier dispositif multiliaison comprend une première station fonctionnant sur une première liaison et une deuxième station fonctionnant sur une deuxième liaison ; et
transmettre (S302), par le premier dispositif multiliaison, la trame radio sur la première liaison, dans lequel la trame radio comprend un élément d'information, l'élément d'information comprend une deuxième information d'indication, la deuxième information d'indication comprend un seuil, et le seuil est utilisé pour indiquer une valeur minimale d'une différence entre des fréquences de fonctionnement de deux liaisons qui prennent en charge des opérations simultanées d'émission/réception.

2. Procédé de communication multiliaison, comprenant :
recevoir (S302), par une troisième station, une trame radio transmise par un premier dispositif multiliaison, dans lequel le premier dispositif multiliaison comprend une première station fonctionnant sur une première liaison et une deuxième station fonctionnant sur une deuxième liaison, dans lequel la trame radio comprend un élément d'information, dans lequel l'élément d'information comprend une deuxième information d'indication, la deuxième information d'indication comprend un seuil, et le seuil est utilisé pour indiquer une valeur minimale d'une différence entre des fréquences de fonctionnement de deux liaisons qui prennent en charge les opérations simultanées d'émission/réception ;
obtenir, par la troisième station, le seuil à partir de la trame radio.

3. Procédé selon la revendication 1 ou 2, dans lequel les opérations simultanées d'émission/réception comprennent une première opération et une deuxième opération, la première opération est que la deuxième station effectue une opération de réception pendant que la première station effectue une opération d'émission, et la deuxième opération est que la deuxième station effectue une opération d'émission pendant que la première station effectue une opération de réception.

4. Procédé selon la revendication 3, dans lequel l'élément d'information comprend une première information d'indication, dans lequel la première information d'indication comprend une information de 1 bit, et l'information de 1 bit est utilisée pour indiquer si à la fois la première station et la deuxième station prennent en charge la première opération et la deuxième opération.

5. Procédé selon la revendication 3 ou 4, dans lequel la première information d'indication comprend une information de 2 bits, une information du premier bit dans l'information de 2 bits est utilisée pour indiquer si la première station et la deuxième station prennent en charge la première opération, et une information du deuxième bit dans l'information de 2 bits est utilisée pour indiquer si la première station et la deuxième station prennent en charge la deuxième opération.

6. Procédé selon l'une quelconque des revendications 3 à 5, dans lequel la première information d'indication comprend plusieurs éléments d'information de 1 bit ou plusieurs éléments d'information de 2 bits, et un élément d'information de 1 bit ou un élément d'information de 2 bits est utilisé pour indiquer si la première station utilisant une première largeur de bande et la deuxième station utilisant une deuxième largeur de bande prennent en charge des opérations simultanées d'émission/réception.

7. Procédé selon l'une quelconque des revendications 1 à 6, dans lequel le premier dispositif multiliaison comprend au moins une entité logique multiliaison, l'entité logique multiliaison comprend au moins une station, l'élément d'information comprend une troisième information d'indication, et la troisième information d'indication est utilisée pour indiquer si la première station et la deuxième station sont situées dans une même entité logique multiliaison.

8. Procédé selon l'une quelconque des revendications 1 à 6, dans lequel l'élément d'information comprend une information d'identification de la deuxième liaison ; et l'élément d'information comprend un élément multibande, un élément de rapport de voisinage réduit ou un élément de rapport de voisinage.

9. Procédé selon l'une quelconque des revendications 1 à 8, dans lequel la trame radio comprend un élément d'information de capacité d'émission/réception, l'élément d'information de capacité d'émission/réception comprend un ID d'élément, une longueur d'élément et l'information d'indication de capacité, et l'information d'indication de capacité comprend un identifiant de liaison de la première liaison et un identifiant de liaison de la deuxième liaison.

10. Procédé selon l'une quelconque des revendications 1 à 9, dans lequel la première station et la deuxième station sont des stations sans point d'accès, AP, STA, dans lequel la trame radio est une trame de demande de sonde, une trame d'authentification, une trame de demande d'association ou une trame de demande de réassociation.

11. Procédé selon l'une quelconque des revendications 1 à 9, dans lequel la première station et la deuxième station sont des stations à point d'accès, AP, STA, dans lequel la trame radio est une trame de balise, une trame de réponse de sonde, une trame de réponse d'association, une trame d'authentification ou une trame de réponse de réassociation.

12. Support de stockage lisible par ordinateur, le support de stockage lisible par ordinateur stockant des instructions qui, lorsque les instructions sont exécutées sur un ordinateur, amènent l'ordinateur à exécuter le procédé selon l'une quelconque des revendications 1 à 11.

13. Appareil, configuré pour exécuter le procédé selon l'une quelconque des revendications 1 à 11.
